# EUROPÄISCHE PATENTANMELDUNG

(11) **EP 1 975 371 A2**
(43) Veröffentlichungstag der Anmeldung: **01.10.2008**
(21) Anmeldenummer: 08005015.6
(22) Anmeldetag: 18.03.2008
(51) Int. Cl.: F01D 5/08

(54) **Vordrallsystem für eine Gasturbine**

(30) Priorität: 24.03.2007 DE 102007014253
(71) Anmelder: MTU Aero Engines GmbH, 80995 München (DE)
(72) Erfinder: Kutz, Joachim, 85247 Schwabhausen (DE); Bricaud, Cyrille, 76228 Karlsruhe (DE)

(57) **Zusammenfassung**

Die Erfindung betrifft eine Turbine, insbesondere eine Hochdruckturbine, einer Gasturbine, insbesondere eines Gasturbinenflugtriebwerks, mit einem rotorseitigen La.ufschaufelkranz, wobei in Durchströmungsrichtung der Turbine gesehen stromaufwärts eines scheibenförmigen Rotorgrundkörpers des Lauischauielkfanzes eine rotorseitige Abdeckscheibe angeordnet ist, die über einen Flansch mit einem Flansch des Rotorgrundkörpers verbunden ist und die zusammen mit dem Rotorgrundkörper einen Durchströmungsraum für Kühlluft: definiert, und wobei stromaufwärts der Flansche von rotorseitiger Abdeckscheibe und rotorseitigem Grundkörper mindestens eine statorseitige Baugruppe angeordnet ist, die zusammen mit mindestens einer rotorseitigen Baugruppe eine Drallkammer für die Kühlluft derart definiert, dass Kühlluft über mindestens einer statorseitigen Baugruppe zugeordnete statorseitige Strömungskanäle (23) in die Drallkammer und über mindestens einer rotorseitigen Baugruppe zugeordnete rotorseitige Strömungskanäle (24) von der Drallkamme-r in den Durchströmungsraum gelangtr Erfindungsgeuxäß erstrecken sich die rotorseitigen Strömungskanäle (24), über welche die Kühlluft von der Drallkammer in den Durchströmungsraum gelangt, in einem Eintrittsbereich (28), mit welchem dieselben in die Drallkammer münden, vorwiegend in Umfangsrichtwag und in einem Austrittsbereich (29), mit welchem dieselben in den Durchströmungsraum münden, wahlweise von vorwiegend in Umfangsrichtung bis im Wesentlichen in Axialrichtung.

## Beschreibung

Die Erfindung betrifft eine Turbine, insbesondere eine Hochdruckturbine, einer Gasturbine, insbesondere eines Gasturbinenflugtriebwerks, nach dem Oberbegriff des Anspruchs 1.

Gasturbinenflugtriebwerke verfügen über mindestens einen Verdichter, mindestens eine Brennkammer sowie mindestens eine Turbine. So sind aus der Praxis Gasturbinenflugtriebwerke bekannt, die zwei Verdichter, nämlich einen Niederdruckverdichter und einen Hochdruckverdichter, sowie zwei Turbinen, nämlich eine Hochdruckturbine sowie eine Niederdruckturbine, umfassen. Weiterhin sind Gasturbinenflugtriebwerke mit drei Verdichtern, nämlich einem Niederdruckverdichter, einem Mitteldruckverdichter und einem Hochdruckverdichter, sowie drei Turbinen, nämlich einer Hochdruckturbine, einer Mitteldruckturbine und einer Niederdruckturbine, bekannt.

Insbesondere im Bereich der Hochdruckturbine eines Gasturbinenflugtriebwerks herrschen hohe Temperaturen, sodass Laufschaufeln der Hochdruckturbine gekühlt werden müssen. Bei aus dem Stand der Technik bekannten Hochdruckturbinen erfolgt die Kühlung der Laufschaufeln der Hochdruckturbine derart, dass Kühlluft den Laufschaufeln der Hochdruckturbine zugeführt wird, wobei die Kühlluft über statorseitige Strömungskanäle in eine Drallkammer und ausgehend von der Drallkammer über rotorseitige Strömungskanäle in einen Durchströmungsraum gelangt, wobei die Kühlluft von dem Durchströmungsraum den Laufschaufeln der Hochdruckturbine zugeführt werden kann.

Bei den aus dem Stand der Technik bekannten Hochdruckturbinen verlaufen die statorseitigen Strömungskanäle derart, dass dieselben einen sich im Wesentlichen in Axialrichtung erstreckenden Eintrittsbereich und einen sich im Wesentlichen in Umfangsrichtung erstreckenden Austrittsbereich aufweisen. Die rotorseitigen Strömungskanäle erstrecken sich durchgehend im Wesentlichen in Axialrichtung. Bei derartigen Hochdruckturbinen wird die mittlere tangentiale Geschwindigkeit der Kühlluftströmung in der Drallkammer derart eingestellt, dass dieselbe der Rotationsgeschwindigkeit der rotorseitigen Strömungskanäle entspricht. Hierdurch kann eine definierte Temperaturabsenkung der Kühlluft realisiert werden, einer weiteren Verringerung der Temperatur der Kühlluft sind jedoch Grenzen gesetzt.

Hiervon ausgehend liegt der vorliegenden Erfindung das Problem zu Grunde, eine neuartige Turbine einer Gasturbine zu schaffen.

Dieses Problem wird durch eine Turbine einer Gasturbine im Sinne von Anspruch 1 gelöst. Erfindungsgemäß erstrecken sich die rotorseitigen Strömungskanäle, über welche die Kühlluft von der Drallkammer in den Durchströmungsraum gelangt, in einem Eintrittsbereich, mit welchen dieselben in die Drallkammer münden, vorwiegend in Umfangsrichtung und in einem Austrittsbereich, mit welchen dieselben in den Durchströmungsraum münden, wahlweise von vorwiegend in Umfangsrichtung bis im Wesentlichen in Axialrichtung.

Im Sinne der hier vorliegenden Erfindung erstrecken sich die rotorseitigen Strömungskanäle im Eintrittsbereich derselben im Wesentlichen in Umfangsrichtung. Durch derart orientierte, rotorseitige Strömungskanäle kann die tangentiale Geschwindigkeit der Kühlluftströmung in der Drallkammer gegenüber aus dem Stand der Technik bekannten Turbinen und damit die Temperaturabsenkung der Kühlluft und damit letztendlich der Kühleffekt erhöht werden.

Vorzugsweise ist die Erstreckung des Eintrittsbereichs der rotorseitigen Strömungskanäle an die Erstreckung eines Austrittsbereichs der statorseitigen Strömungskanäle derart angepasst, dass unter Beachtung der Geschwindigkeit ein stoßfreier Eintritt der Strömung in die rotorseitigen Strömungskanäle erfolgt.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: einen Ausschnitt aus einer Hochdruckturbine eines Gasturbinenflugtriebwerks;
- Fig. 2: eine schematisiere Darstellung zur Verdeutlichung des Standes der Technik; und
- Fig. 3: eine schematisiere Darstellung zur Verdeutlichung der Erfindung.

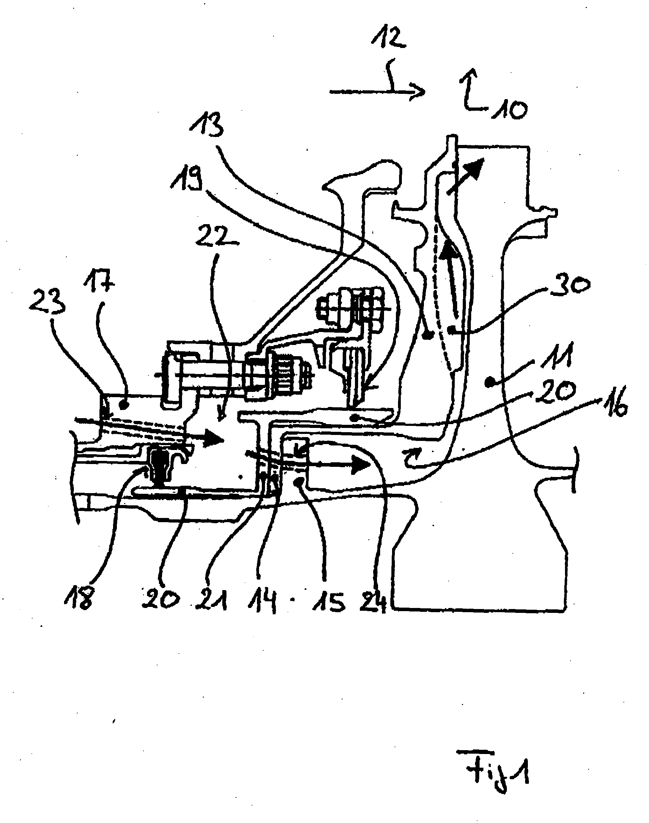

Fig. 1 zeigt einen Ausschnitt aus einer Hochdruckturbine eines Gasturbinenflugtriebswerks im Bereich eines Laufschaufelnkranzes 10, wobei vom Laufschaufelkranz 10 lediglich ein scheibenförmiger Rotorgrundkörper 11 gezeigt ist. In Durchströmungsrichtung (Pfeil 12) der Hochdruckturbine gesehen, ist stromaufwärts des Rotorgrundkörpers 11 des Laufschaufelkranzes 10 eine rotorseitige Abdeckscheibe 13 angeordnet, wobei die rotorseitige Abdeckscheibe 13 mit dem Rotorgrundkörper 11 an Flanschen 14, 15 verbunden ist.

Der Rotorgrundkörper 11 sowie die Abdeckscheibe 13 begrenzen zusammen einen Durchströmungsraum 16 für Kühlluft, über den Kühlluft dem Laufschaufelkranz 10 zugeführt werden kann.

In Durchströmungsrichtung (Pfeil 12) der Hochdruckturbine gesehen sind stromaufwärts des Rotorgrundkörpers 11 sowie der Abdeckscheibe 13 statorseitige Baugruppen angeordnet, wobei in Fig. 1 als eine statorseitige Baugruppe ein Vordralldüsenkranz 17 dargestellt ist. Ein sich zwischen den statorseitigen Baugruppen und den rotorseitigen Baugruppen ausbildender Spalt ist über statorseitige Dichtelemente 18, 19 abgedichtet, wobei die statorseitigen Dichtelemente 18, 19 mit einem rotorseitigen Dichtelement 20 zusammenwirken. Das rotorseitige Dichtelement 20 greift mit einem Flansch 21 am Flansch 14 der Abdeckscheibe 13 an.

Mindestens eine statorseitige Baugruppe, im gezeigten Ausführungsbeispiel der Vordralldüsenkranz 17, sowie mindestens eine rotorseitige Baugruppe, im gezeigten Ausführungsbeispiel das rotorseitige Dichtungselement 20, definieren zusammen eine Drallkammer 22 für die Kühlluft, die in Durchströmungsrichtung gesehen stromaufwärts des Durchströmungsraums 16 positioniert ist. Die Kühlluft gelangt über statorseitige Strömungskanäle 23 in die Drallkammer 22 und ausgehend von der Drallkammer 22 über rotorseitige Strömungskanäle 24 in den Durchströmungsraum 16.

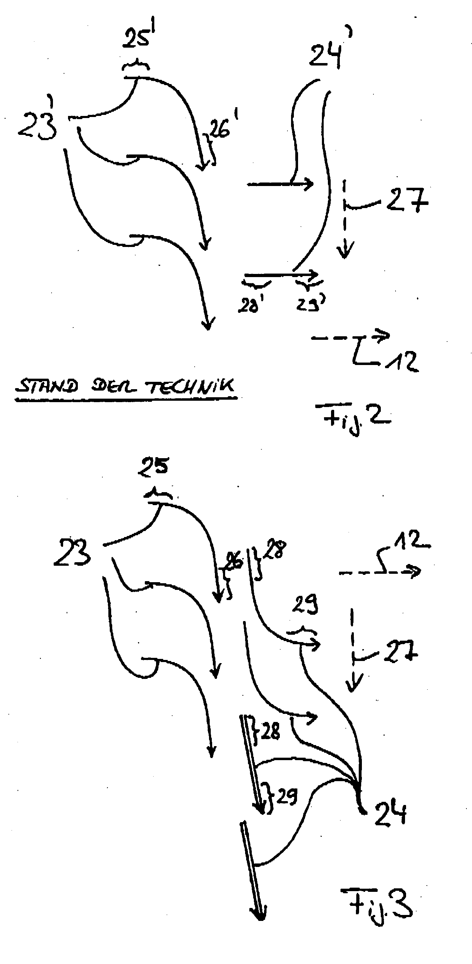

Fig. 2 verdeutlicht die aus dem Stand der Technik bekannte Erstreckung statorseitiger Strömungskanäle 23' sowie rotorseitiger Strömungskanäle 24', wobei in Fig. 2 die Pfeile jeweils Mittellinien der Strömungskanäle entsprechen. Die Darstellung der Fig. 2 entspricht dabei einer Blickrichtung von radial außen auf die Drehachse der Hochdruckturbine.

Wie Fig. 2 entnommen werden kann, sind bei aus dem Stand der Technik bekannten Hochdruckturbinen die statorseitigen Strömungskanäle 23' derart orientiert, dass Eintrittsbereiche 25' derselben im Wesentlichen in Axialrichtung und Austrittsbereiche 26' derselben, mit welchen dieselben in die Drallkammer 22 münden, im Wesentlichen in Umfangsrichtung (Pfeil 27) verlaufen. Die rotorseitigen Strömungskanäle 24 erstrecken sich nach dem Stand der Technik durchgehend in Axialrichtung, Eintrittsbereiche 28' derselben, mit welchen dieselben in die Drallkammer 22 münden, und Austrittsbereiche 29' derselben, mit welchen dieselben in den Durchströmungsraum 16 münden, verlaufen jeweils im in Axialrichtung.

Demgegenüber verdeutlicht Fig. 3 die erfindungsgemäße Ausgestaltung einer Hochdruckturbine wiederum in Blickrichtung von radial außen auf eine Drehachse der Hochdruckturbine, wobei die Pfeile 23 in Fig. 3 Mittellinien der statorseitigen Strömungskanäle und die Pfeile 24 Mittellinien der rotorseitigen Strömungskanäle entsprechen.

Wie Fig. 3 entnommen werden kann, erstrecken sich die statorseitigen Strömungskanäle 23 derart, dass Eintrittsbereiche 25 derselben sich im Wesentlichen in Axialrichtung (Pfeil 12) und Austrittsbereiche 26 derselben im Wesentlichen in Umfangsrichtung (Pfeil 27) erstrecken. Die Austrittsbereiche 26 der statorseitigen Strömungskanäle 23, mit welchen dieselben in die Drallkammer 22 münden, verlaufen demnach im Wesentlichen in Umfangsrichtung (Pfeil 27).

Die rotorseitigen Strömungskanäle 24, über welche die Kühlluft von der Drallkammer 22 in den Durchströmungsraum 16 gelangt, erstrecken sich derart, dass Eintrittsbereiche 28 derselben, mit welchen dieselben in die Drallkammer 16 münden, vorwiegend in Umfangsrichtung verlaufen dergestalt, dass sie dem sich ergebenden Geschwindigkeitsreieck angepasst sind. Austrittsbereiche 29 der rotorseitigen Strömungskanäle 24, mit welchen dieselben in den Durchströmungsraum 16 münden, verlaufen wahlweise von vorwiegend in Umfangsrichtung (Pfeil 27) bis im Wesentlichen in Axialrichtung (Pfeil 12). Siehe hierzu in Figur 3 unten die beiden geraden, doppelt linierten Pfeile 24 und oben die beiden gekrümmten, einfach linierten Pfeile 24.

Wie Fig. 3 entnommen werden kann, ist die Erstreckung der Eintrittsbereiche 28 der rotorseitigen Strömungskanäle 24 an die Erstreckung der Austrittsbereiche 26 der statorseitigen Strömungskanäle 23 derart angepasst, dass dieselben mit einem an das Geschwindigkeitsdreieck angepassten Winkel in die Drallkammer 22 münden.

Wie Fig. 1 entnommen werden kann, erstrecken sich im gezeigten Ausführungsbeispiel die statorseitigen Strömungskanäle 23 durch den statorseitigen Vordralldüsenkranz 17. Die rotorseitigen Strömungskanäle 24, über welche die Kühlluft von der Drallkammer 22 in den Durchströmungsraum 16 gelangt, erstrecken sich im gezeigten Ausführungsbeispiel durch die Flansche 14, 15 und 21 von Abdeckscheibe 13, Rotorgrundkörper 11 sowie rotorseitigem Dichtelement 20.

Es sei darauf hingewiesen, dass die Flansche 14 und 21 von Abdeckscheibe 13 und rotorseitigem Dichtelement 20 im Bereich der rotorseitigen Strömungskanäle 24 auch ausgespart sein können, wobei sich dann die rotorseitigen Strömungskanäle 24 ausschließlich durch den Flansch 15 des Rotorgrundkörpers 11 erstrecken.

Wie Fig. 1 weiterhin entnommen werden kann, verfügt die Abdeckscheibe 13 über in den Durchströmungsraum 16 hineinragende, schaufelartige Vorsprünge 30, die der Führung der Kühlluftströmung im Durchströmungsraum 16 dienen.

### Bezugszeichenliste

- 10: Laufschaufelkranz
- 11: Rotorgrundkörper
- 12: Durchströmungsrichtung
- 13: Abdeckscheibe
- 14: Flansch
- 15: Flansch
- 16: Durchströmungsraum
- 17: Vordralldüsenkranz
- 18: statorseitiges Dichtelement
- 19: statorseitiges Dichtelement
- 20: rotorseitiges Dichtelement
- 21: Flansch
- 22: Drallkammer
- 23, 23': statorseitiger Strömungskanal
- 24, 24': rotorseitiger Strömungskanal
- 25,25': Eintrittsbereich
- 26, 26': Austrittsbereich
- 27: Umfangsrichtung
- 28, 28': Eintrittsbereich
- 29, 29': Austrittsbereich
- 30: Vorsprung

## Patentansprüche

1. Turbine, insbesondere Hochdruckturbine, einer Gasturbine, insbesondere eines Gasturbinenflugtriebwerks, mit einem rotorseitigen Laufschaufelkranz, wobei in Durchströmungsrichtung der Turbine gesehen stromaufwärts eines scheibenförmigen Rotorgrundkörpers des Laufschaufelkranzes eine rotorseitige Abdeckscheibe angeordnet ist, die über einen Flansch mit einem Flansch des Rotorgrundkörpers verbunden ist und die zusammen mit dem Rotorgrundkörper einen Durchströmungsraum für Kühlluft definiert, und wobei stromaufwärts der Flansche von rotorseitiger Abdeckscheibe und rotorseitigem Grundkörper mindestens eine statorseitige Baugruppe angeordnet ist, die zusammen mit mindestens einer rotorseitigen Baugruppe eine Drallkammer für die Kühlluft derart definiert, dass Kühlluft über mindestens einer statorseitigen Baugruppe zugeordnete statorseitige Strömungskanäle in die Drallkammer und über mindestens einer rotorseitigen Baugruppe zugeordnete rotorseitige Strömungskanäle von der Drallkammer in den Durchströmungsraum gelangt,
**dadurch gekennzeichnet,**
**dass** sich die rotorseitigen Strömungskanäle (24), über welche die Kühlluft von der Drallkammer (22) in den Durchströmungsraum (16) gelangt, in einem Eintrittsbereich (28), mit welchem dieselben in die Drallkammer (22) münden, vorwiegend in Umfangsrichtung und in einem Austrittsbereich (29), mit welchem dieselben in den Durchströmungsraum (16) münden, wahlweise von vorwiegend in Umfangsrichtung bis im wesentlichen in Axialrichtung erstrecken.

2. Turbine nach Anspruch 1,
**dadurch gekennzeichnet,**
**dass** die Erstreckung des Eintrittsbereichs (28) der rotorseitigen Strömungskanäle (24) an die Erstreckung eines Austrittsbereichs (26) der statorseitigen Strömungskanäle (23) derart angepasst ist, dass dieselben mit einem in etwa gleichen, dem Geschwindigkeitsdreieck angepassten Winkel in die Drallkammer (22) münden.

3. Turbine nach Anspruch 1 oder 2,
**dadurch gekennzeichnet,**
**dass** sich die rotorseitigen Strömungskanäle (24), über welche die Kühlluft von der Drallkammer (22) in den Durchströmungsraum (16) gelangt, zumindest durch den Flansch (15) des Rotorgrundkörpers (11) erstrecken.

4. Turbine nach Anspruch 3,
**dadurch gekennzeichnet,**
**dass** sich die rotorseitigen Strömungskanäle (24), über welche die Kühlluft von der Drallkammer (22) in den Durchstromungsraum (16) gelangt, ebenfalls durch den Flansch (14) der Abdeckscheibe (13) erstrecken.

5. Turbine nach Anspruch 4,
**dadurch gekennzeichnet,**
**dass** sich die rotorseitigen Strömungskanäle (24), über welche die Kühlluft von der Drallkammer (22) in den Durchströmungsraum (16) gelangt, ebenfalls durch einen Flansch (21) eines Dichtelements (20) erstrecken, der an dem Flansch (14) der Abdeckscheibe (13) angreift.
